# EUROPÄISCHE PATENTSCHRIFT

(11) **EP 3 551 803 B1**
(45) Veröffentlichungstag und Bekanntmachung des Hinweises auf die Patenterteilung: **18.12.2024**
(21) Anmeldenummer: 17816523.9
(22) Anmeldetag: 27.11.2017
(51) Int. Cl.: E01F 15/08

(54) **BEWEHRUNGSELEMENT**
REINFORCING ELEMENT
ÉLÉMENT D'ARMATURE

(30) Priorität: 07.12.2016 AT 511182016
(43) Veröffentlichungstag der Anmeldung: 16.10.2019
(73) Patentinhaber: DELTABLOC International GmbH, 2752 Wöllersdorf-Steinabrückl (AT)
(72) Erfinder: EDL, Thomas, 7052 Müllendorf (AT); SPITZER, Franz, 2831 Warth (AT)
(74) Vertreter: Gibler & Poth Patentanwälte KG
(86) Internationale Anmeldenummer: PCT/EP2017/080537
(87) Internationale Veröffentlichungsnummer: WO 2018/104094

(56) Entgegenhaltungen:
- EP-A1- 1 063 357
- FR-A1- 2 862 674
- US-A- 5 651 635
- US-B1- 6 394 410

## Beschreibung

Die Erfindung betrifft ein Bewehrungselement gemäß dem Oberbegriff des Patentanspruches 1.

Derartige Bewehrungselemente werden für Betonleitwandelemente eines Fahrzeugrückhaltesystems eingesetzt. Betonleitwandelemente sind Betonfertigteile, welche zusammen ein Fahrzeugrückhaltesystem ausbilden, welches Fahrzeuge am Verlassen der Fahrbahn oder das Eindringen in die Gegenfahrbahn hindern soll. Derartige Betonleitwandelemente weisen zumindest an einer der Fahrbahn zugewandten Längsseite ein charakteristisches Profil auf, welches dafür sorgt, dass ein schräg auffahrendes Fahrzeug nicht abprallt, sondern in eine Fahrtrichtung parallel zur Längsseite umgelenkt wird.

Betonleitwandelemente weisen üblicherweise eine Bewehrung auf, welche aus mehreren einzelnen Elementen gebunden werden. Die konkrete Form der Bewehrung hängt dabei von der zu erreichenden Rückhaltewirkung des Betonleitwandelements ab, wobei es aus wirtschaftlichen Gründen andererseits ein Ziel ist so wenig Bewehrungsmaterial wie möglich einzusetzen.

Die Bewehrung weist üblicherweise zumindest Längsbewehrungsstäbe auf, welche ein Durchbiegen reduzieren oder ein Durchbrechen des Betonleitwandelements im Falle eines Aufpralles verhindern sollen. Die Längsbewehrungsstäbe werden hierbei häufig mittig eingesetzt. Die Längsbewehrungsstäbe werden weiters oftmals mit Bügeln verbunden, um die innere Stabilität zu erhöhen. Zur Vermeidung von Abplatzungen, insbesondere im Kopfbereich der Betonleitwandelemente, werden weiters oftmals zusätzliche filigrane Baustahlmatten eingesetzt.

Aus der US 5 651 635 A ist ein Betonleitwandelement mit einem gebundenen oder geschweißten Bewehrungskorb bekannt. Die Bügel sind dabei komplett umlaufend angeordnet und sind derart gebogen, dass diese das Abweiseprofil ausbilden.

Aus der FR 2 862 674 A1 ist ein, als Fertigteil ausgebildetes Betonleitwandelement bekannt. Die Bewehrung erfolgt durch die Verbindung von Längsstäbe mittels Bügeln verbunden, wobei das Profil der Bewehrung durch zwei L-förmige Bügeln und einen U-förmigen Bügel gebildet wird.

Aus der EP 1 063 357 A1 ist ein Betonleitwandelement mit einer Bewehrung mit einem U-profil bekannt.

Aus der US 6 394 410 B1 ist eine Ortbetonleitwand bekannt, bei welcher die Längsbewehrung und die Bügeln miteinander gebunden sind.

Nachteilig daran ist, dass derartige Bewehrungen für Betonleitwandelemente sehr aufwendig und personalintensiv in der Fertigung sind. Weiters kommt es durch die gebundene Bewehrung zu Schwankungen in der Rückhaltewirkung der Betonleitwandelemente, da Fehler oder Abweichungen beim Binden der einzelnen Bewehrungsteile entstehen können, oder einzelne Bewehrungsteile beim Gießprozess des Betons verschoben werden.

Aufgabe der Erfindung ist es daher ein Bewehrungselement der eingangs genannten Art anzugeben, mit welchem die genannten Nachteile vermieden werden können, mit welchem ein Betonleitwandelement mit weniger Aufwand hergestellt werden kann, und dabei eine zuverlässig hohe Rückhaltewirkung bei gesteigerter Prozesssicherheit im Herstellungsvorgang aufweist.

Erfindungsgemäß wird dies durch die Merkmale des Patentanspruches 1 erreicht.

Dadurch ergibt sich der Vorteil, dass Betonleitwandelemente mit weniger Aufwand aber höherer Zuverlässigkeit hergestellt werden können. Hierbei sind die Längsbewehrungsstäbe und Bügel bereits so geformt, dass diese das Abweiseprofil des herzustellenden Betonleitwandelements aufweisen, wodurch eine sehr stabile Bewehrung nahe an den relevanten Oberflächen positioniert angeordnet sein kann. Dadurch erübrigt sich ein komplexer Aufbau mit filigranen Baustahlmatten an exponierten Stellen. Als weiterer Vorteil zeigt sich, dass die bisherigen Überlappungen von Längsbewehrungsstäbe, Bügeln und Bewehrungsmatten sich auf das Überlappen der Längsbewehrungsstäbe mit den Bügeln reduziert. Die Bewehrungslagen reduzieren sich in diesen Überlappungsbereichen somit signifikant. Weiters können die Bewehrungselemente bereits in hohen Stückzahlen vorgefertigt werden, und anschließend zu den Betonwerken geliefert werden, wo dann die Betonleitwandelemente gegossen werden. Dadurch kann die Herstellung wesentlich wirtschaftlicher, aber auch mit engeren Fertigungstoleranzen erfolgen.

Weiters betrifft die Erfindung ein Betonleitwandelement gemäß dem Patentanspruch 8.

Weiters betrifft die Erfindung ein Verfahren zur Herstellung eines, an wenigstens einer Längsseite ein Abweiseprofil aufweisendes Betonleitwandelements gemäß dem Patentanspruch 11.

Aufgabe der Erfindung ist es daher weiters ein Verfahren anzugeben, mit welchem die genannten Nachteile vermieden werden können, mit welchem ein Betonleitwandelement mit weniger Aufwand hergestellt werden kann, und dabei eine zuverlässig hohe Rückhaltewirkung aufweist.

Erfindungsgemäß wird dies durch die Merkmale des Patentanspruches 11 erreicht. [weiter auf Seite 3 der ursprünglichen Beschreibung]

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Betonleitwandelement mit einer nicht erfindungsgemäßen, ersten bevorzugten Ausführungsform der
Bewehrungselemente in einer axonometrischen Darstellung;
Fig. 2 ein Betonleitwandelement mit einer erfindungsgemäßen, zweiten bevorzugten Ausführungsform
der Bewehrungselemente in einer axonometrischen Darstellung;
Fig. 3 ein Detail aus Fig. 2;
Fig. 4 das Betonleitwandelement aus Fig. 2 als Explosionsdarstellung; und
Fig. 5 ein Stapel aus Bewehrungselementen der zweiten bevorzugten Ausführungsform in einer axonometrischen Darstellung.

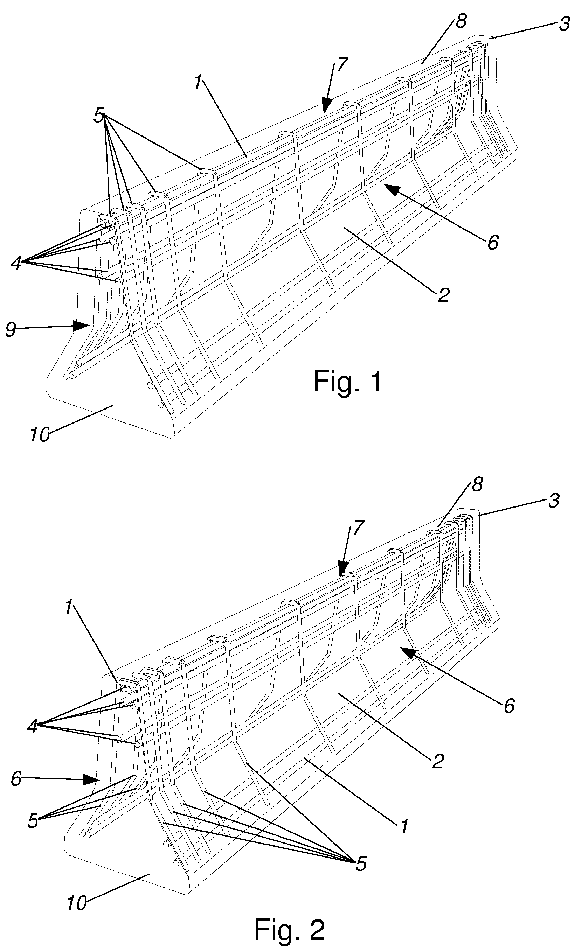

Die Fig. 1 bis 5 zeigen zumindest Teile bevorzugter Ausführungsformen eines Bewehrungselementes 1 für ein, an wenigstens einer Längsseite 2 ein Abweiseprofil aufweisendes Betonleitwandelement 3. Das Bewehrungselement 1 ist für den Einsatz in einem Betonleitwandelement 3 vorgesehen, welches Betonleitwandelement 3 wenigstens eine Längsseite 2 mit einem Abweiseprofil aufweist. Das Abweiseprofil ist ein für Betonleitwandelement 3 von Fahrzeugrückhaltesystemen charakteristisches Profil, welches dafür sorgt, dass ein schräg auf die Längsseite 2 auffahrendes Fahrzeug nicht abprallt, sondern in eine Fahrtrichtung parallel zur Längsseite 2 umgelenkt wird.

Es ist vorgesehen, dass das Bewehrungselement 1 Längsbewehrungsstäbe 4 und quer zu den Längsbewehrungsstäben 4 verlaufende und mit den Längsbewehrungsstäben 4 verbundene, vorzugsweise verschweißte, Bügel 5 aufweist. Die Längsbewehrungsstäbe 4 sind dazu vorgesehen in dem Betonleitwandelement 3 in Längsrichtung zu verlaufen. Die Längsbewehrungsstäbe 4 sind mittels Bügeln 5 miteinander verbunden. Durch die Längsbewehrungsstäbe 4 und die Bügel 5 wird bevorzugt ein zweidimensionales, gekrümmtes Gitter aufgebaut. Die Bügel 5 können insbesondere normal zu den Längsbewehrungsstäbe 4 verlaufen. In den Fig. 1, 2 und 4 sind nur ein Teil der Längsbewehrungsstäbe 4 und Bügel 5 mit Bezugszeichen versehen.

Bevorzugt besteht das Bewehrungselement 1 aus den Längsbewehrungsstäben 4 und den Bügeln 5.

Weiter ist vorgesehen, dass das Bewehrungselement 1 zumindest einen ersten Bereich 6 aufweist, und dass der erste Bereich 6 im Wesentlichen das Abweiseprofil aufweist. Das Bewehrungselement 1 kann hierbei lediglich aus dem ersten Bereich 6 bestehen, oder weitere Bereiche 7,9 umfassen. Der erste Bereich 6 ist im Wesentlichen geformt wie das Abweiseprofil des herzustellenden Betonleitwandelements 3. Der erste Bereich 6 kann insbesondere im Wesentlichen wie die wenigstens eine Längsseite 2 des Betonleitwandelements 3 ausgebildet sein. Derart kann der erste Bereich 6 des Bewehrungselements 1 im Betonkörper des Betonleitwandelements 3 im Wesentlichen dem Verlauf der wenigstens einen Längsseite 2 des Betonleitwandelements 3 folgend angeordnet sein.

Dadurch ergibt sich der Vorteil, dass Betonleitwandelemente 3 mit weniger Aufwand aber höherer Zuverlässigkeit hergestellt werden können. Hierbei werden die Längsbewehrungsstäbe 4 und Bügel 5 bereits so geformt, dass diese zumindest bereichsweise das Abweiseprofil des herzustellenden Betonleitwandelements 3 aufweisen, wodurch eine sehr stabile Bewehrung nahe an den relevanten Oberflächen positioniert angeordnet sein kann. Dadurch erübrigt sich ein komplexer Aufbau mit filigranen Baustahlmatten an exponierten Stellen. Als weiterer Vorteil zeigt sich, dass die bisherigen Überlappungen von Längsbewehrungsstäbe, Bügeln und Bewehrungsmatten sich auf das Überlappen der Längsbewehrungsstäbe mit den Bügeln reduziert. Weiters können die Bewehrungselemente 1 bereits in hohen Stückzahlen vorgefertigt werden, und anschließend zu den Betonwerken geliefert werden, wo dann die Betonleitwandelemente 3 gegossen werden. Dadurch kann die Herstellung wesentlich wirtschaftlicher, aber auch mit engeren Fertigungstoleranzen erfolgen.

Die Längsbewehrungsstäben 4 können insbesondere gerade sein.

Die Längsbewehrungsstäbe 4 können insbesondere aus Bewehrungsstahl sein.

Sämtliche Längsbewehrungsstäbe 4 eines Bewehrungselements 1 können insbesondere gleich ausgebildet sein.

Die Bügel 5 können bevorzugt als, insbesondere mit einem vorgebbaren Radius, abgewinkelte Bewehrungsstäbe ausgebildet sein. Die Bügel können im ersten Bereich 6 insbesondere dem Abweiseprofil folgend verlaufend ausgebildet sein.

Die Bügel 5 können bevorzugt aus starren Bewehrungsstäben ausgebildet sein.

Die Bügel 5 können insbesondere aus Bewehrungsstahl sein.

Sämtliche Bügel 5 eines Bewehrungselements 1 können insbesondere gleich ausgebildet sein.

Die Längsbewehrungsstäbe 4 und die Bügel 5 können bevorzugt miteinander verschweißt sein.

Weiters ist ein Betonleitwandelement 3 für ein Fahrzeugrückhaltesystem vorgesehen, wobei das Betonleitwandelement 3 an wenigstens einer Längsseite 2 das Abweiseprofil aufweist, wobei im Bereich der wenigstens einen Längsseite 2 das Bewehrungselement 1 oberflächennah angeordnet ist. Das Betonleitwandelement 3 weist einen, in den Fig. 1 bis 4 durchsichtig dargestellten, Betonkörper auf, in welchem das oder die Bewehrungselemente 1 angeordnet sind. Die oberflächennahe Anordnung kann insbesondere bedeuten, dass das Bewehrungselement 1 in einer Tiefe von maximale 10 cm zu der Oberfläche des Betonkörpers angeordnet ist.

Das Betonleitwandelement 3 kann insbesondere zwei Längsseiten 2, zwei Stirnseiten 10, eine Oberseite 8 sowie eine Standfläche aufweisen.

Wenigstens eine der Längsseiten 2 weist das Abweiseprofil auf.

Bevorzugt können beide Längsseiten 2 das Abweiseprofil aufweisen, wie dies beispielhaft in den bevorzugten Ausführungsformen in Fig. 1 bis 4 dargestellt ist.

Eine Länge der Längsbewehrungsstäben 4 kann insbesondere im Wesentlichen einer Länge des Betonleitwandelementes 3 entsprechen.

Die Bügel können bevorzugt im Wesentlichen von der Standfläche bis zumindest im Wesentlichen zur Oberseite 8 verlaufen.

Das Betonleitwandelement 3 kann weiters, in den Fig. nicht dargestellte, zum stirnseitigen Kuppeln mehrerer Betonleitwandelemente 3 stirnseitig angeordnete Kupplungseinrichtungen aufweisen. Die Kupplungseinrichtungen an beiden Stirnseiten 10 können insbesondere mit den Bewehrungselementen 1 und/oder zusätzlichen Zugbändern verbunden sein.

Weiters ist ein Verfahren zur Herstellung des, an wenigstens einer Längsseite 2 das Abweiseprofil aufweisendes Betonleitwandelement 3 vorgesehen, wobei die Längsbewehrungsstäbe 4 und die quer zu den Längsbewehrungsstäben 4 verlaufende Bügel 5 zusammen zu dem Bewehrungselement 1 verbunden werden, wobei das Bewehrungselement 1 zumindest den einen ersten Bereich 6 aufweist, wobei der erste Bereich 6 im Wesentlichen das Abweiseprofil aufweist, wobei wenigstens eines der Bewehrungselemente 1 derart in eine Gussform eingebracht wird, dass das wenigstens eine Bewehrungselement 1 bei dem fertigen Betonleitwandelement 3 im Bereich der wenigstens einen Längsseite 2 oberflächennah angeordnet ist, wobei die Gussform zum Ausbilden des Betonleitwandelements 3 mit Beton ausgegossen wird.

Das Verbinden der Längsbewehrungsstäben 4 und der Bügel 5 erfolgt bevorzugt durch Verschweißen.

Insbesondere können die Längsbewehrungsstäben 4 und die Bügel 5 miteinander verschweißt, und die Bügel 5 anschließend in die Form des Abweiseprofils gebogen werden.

Alternativ können die Bügel 5 zunächst gebogen werden, und anschließend mit den Längsbewehrungsstäben 4 verschweißt werden.

Bevorzugt kann vorgesehen sein, dass die Bewehrungselemente 1 zumindest zum Teil, bevorzugt komplette, maschinell hergestellt werden. Insbesondere kann das Biegen der Bügel 5 und das Verschweißen in einer Anlage erfolgen. Alternativ können die Bewehrungselemente 1 in einer Kombination von Maschinen- und Handschweißung umgesetzt werden.

Es ist vorgesehen, dass das Abweiseprofil ein New Jersey Profil oder ein Step Profil ist. In den bevorzugten Ausführungsformen in Fig. 1 bis 4 ist das Abweiseprofil das New Jersey Profil. Das New Jersey Profil weist in der Nähe der Standfläche eine Auffahrfläche auf, welche in eine steilere Abweisefläche übergeht. Das New Jersey Profil ist ein bei Betonleitwandelementen 3 sehr häufig verwendetes Abweiseprofil. Das Step Profil weist zwei parallel zueinander verlaufende Bereiche auf, welche durch eine kleine Stufe zueinander versetzt sind. Insbesondere können die Bügel 5 im ersten Bereich 6 dem Verlauf des New Jersey Profils oder Step Profils folgend ausgebildet sein.

Bevorzugt kann vorgesehen sein, dass die Längsbewehrungsstäbe 4 einen anderen Durchmesser aufweisen als die Bügel 5. Insbesondere kann vorgesehen sein, dass sämtliche Längsbewehrungsstäbe 4 einen ersten Durchmesser aufweisen, dass sämtliche Bügel 5 einen zweiten Durchmesser aufweisen, und dass der erste Durchmesser ungleich ist dem zweiten Durchmesser. Hierbei kann der erste Durchmesser und der zweite Durchmesser derart gewählt sein, dass die Durchmesser an die Rückhalteerfordernisse angepasst sind, und bei den Bügeln 5 die Schwächung an den Biegestellen ausgeglichen werden können.

Weiters kann vorgesehen sein, dass ein Abstand der Bügel 5 zueinander variabel ist, und insbesondere in einem Bereich der Enden der Längsbewehrungsstäbe 4 kleiner ist als in einem Mittelbereich der Längsbewehrungsstäbe 4. Dadurch ist mehr Bewehrungsmaterial in der Nähe der Stirnseiten 10 angeordnet, wo die Gefahr von Beschädigungen und Abplatzungen höher ist.

Insbesondere kann vorgesehen sein, dass ein Abstand der Längsbewehrungsstäbe 4 zueinander variabel ist, und insbesondere in Randbereichen des Abweiseprofils kleiner ist als in einem Mittelbereich des Abweiseprofils. Dadurch ist mehr Bewehrungsmaterial in der Nähe der an den Rändern des Abweiseprofils angeordneten Oberseite 8 sowie der Standfläche angeordnet, wo die Gefahr von Beschädigungen und Abplatzungen höher ist.

Weiters kann vorgesehen sein, dass ein Abstand der Längsbewehrungsstäbe 4 zueinander in einem Bereich der Enden der Bügel 5 kleiner ist als in einem Mittelbereich der Bügel 5. Dadurch kann eine stärkere Bewehrung an den freien Enden der Bügeln erreicht werden, wo Belastungen größer sein können.

Weiters kann vorgesehen sein, dass ein Abstand der Längsbewehrungsstäbe 4 zueinander variabel ist, und insbesondere an den Rändern des ersten Bereiches 6 kleiner ist als in der Mitte des ersten Bereiches 6. Dadurch ist mehr Bewehrungsmaterial in der Nähe der Standfläche und der Oberseite 8, wo die Gefahr von Beschädigungen und Abplatzungen höher ist.

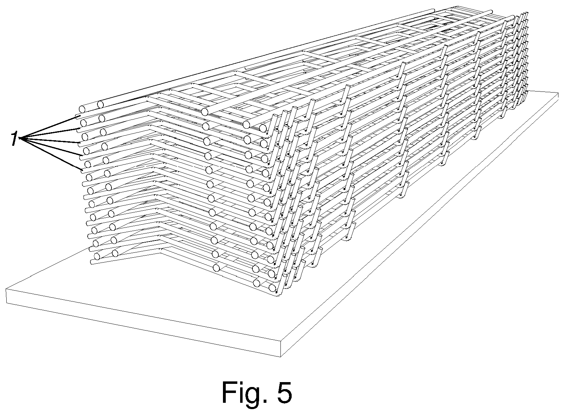

Es ist vorgesehen, dass das Bewehrungselement 1 flach ist. Hierbei ist das Bewehrungselement 1 im Wesentlichen wie eine gekrümmte Fläche geformt. Dadurch ergibt sich der Vorteil, dass die Bewehrungselemente 1 einfach gestapelt und dadurch platzsparend transportiert werden können. Ein Stapel aus Bewehrungselementen 1 der zweiten bevorzugten Ausführungsform ist in Fig. 5 beispielhaft dargestellt.

Es kann vorgesehen sein, dass die aus wenigstens einem Bewehrungselement 1 gebildete Bewehrung des Betonleitwandelements 3 an der Stirnseite 10 offen ist. Es kann vorgesehen sein, dass das Bewehrungselement 1 lediglich aus dem ersten Bereich 6 besteht.

Weiters kann vorgesehen sein, dass an dem ersten Bereich 6 ein zweiter Bereich 7 anschließt, dass der zweite Bereich 7 gegenüber dem ersten Bereich 6 abgewinkelt ist und vorgesehen ist, an einer Oberseite 8 des Betonleitwandelements 3 angeordnet zu sein. Der zweite Bereich 7 kann sich zumindest über eine halbe Breite der Oberseite 8 erstrecken. Dadurch kann ebenfalls die Oberseite 8 bewehrt werden.

In einer nicht erfindungsgemäßen Ausführungsform kann vorgesehen sein, dass an einem, dem ersten Bereich 6 abgewandten Seite des zweiten Bereiches 7 ein dritter Bereich 9 an dem zweiten Bereich 7 anschließt, und dass der dritte Bereich 9 im Wesentlichen das Abweiseprofil aufweist. Der erste Bereich 6, der zweite Bereich 7 und der dritte Bereich 9 bilden hierbei im Wesentlichen das Profil der beiden Längsseiten 2 zusammen mit der Oberseite 8 des herzustellenden Betonleitwandelements 3 aus. Bei dem Betonleitwandelement 3 kann vorgesehen sein, dass das Betonleitwandelement 3 zwei ein Abweiseprofil aufweisende Längsseiten 2 aufweist, und dass ein einziges Bewehrungselement 1 bei beiden Längsseiten 2 angeordnet ist. Insbesondere kann vorgesehen sein, dass das Betonleitwandelement 3 lediglich ein einziges Bewehrungselement 1 aufweist. Dadurch kann durch im Wesentlichen ein einziges vorgefertigtes Bewehrungselement 1 eine Bewehrung sämtlicher exponierter Flächen eines Betonleitwandelements 3 erreicht werden. Ein derartiges Betonleitwandelement 3 ist beispielhaft in Fig. 1 dargestellt.

Alternativ kann vorgesehen sein, dass bei einem Bewehrungselement 1 aus mehreren Bereichen 6,7 lediglich der erste Bereich 6 das Abweiseprofil aufweist.

Bevorzugt kann vorgesehen sein, dass das Bewehrungselement 1 lediglich den ersten Bereich 6 und den zweiten Bereich 7 aufweist.

Insbesondere kann vorgesehen sein, dass das Betonleitwandelement 3 zwei ein Abweiseprofil aufweisende Längsseiten 2 aufweist, und dass bei beiden Längsseiten 2 jeweils ein Bewehrungselement 1 angeordnet ist.

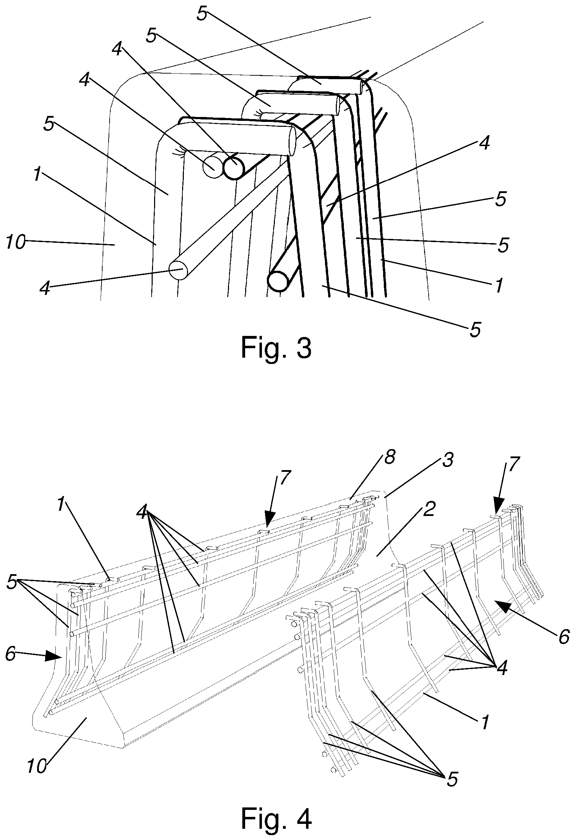

Das Betonleitwandelement 3 kann hierbei bevorzugt zwei, insbesondere im Wesentlichen gleich ausgebildete, Bewehrungselemente 1 aufweisen, wobei besonders bevorzugt jeweils eines der Bewehrungselemente 1 an einer der Längsseiten 2 angeordnet ist. Durch diesen mehrteiligen Aufbau der Bewehrung kann die Handhabung der Bewehrungselemente 1 vereinfacht werden. Weiters wird die Stapelbarkeit verbessert. Zusätzlich können derartige Bewehrungselemente 1 auch bei Betonleitwandelement 3 eingesetzt werden, die lediglich eine Längsseite 2 mit dem Abweiseprofil aufweisen. Derart ausgebildete Bewehrungselement 1 sind beispielhaft in Fig. 2 bis 5 dargestellt, wobei in Fig. 2 beide Bewehrungselemente 1 zusammengefügt dargestellt sind, während in Fig. 4 ein Bewehrungselement 1 innerhalb des Betonkörpers und das andere Bewehrungselement 1 außerhalb des Betonkörpers dargestellt ist.

Bevorzugt kann vorgesehen sein, dass sich die beiden Bewehrungselemente 1 im Bereich einer Oberseite 8 des Betonleitwandelements 3 aneinander grenzen, insbesondere überlappen. Dadurch können beide Bewehrungselemente 1 im Bereich der Oberseite 8 einfach miteinander verbunden werden. Hierbei können die Bügel 5 der beiden Bewehrungselemente 1 derart leicht zueinander versetzt werden, dass diese im zweiten Bereich 7 nebeneinander angeordnet sind.

## Patentansprüche

1. Bewehrungselement (1) für ein, an wenigstens einer Längsseite (2) ein Abweiseprofil aufweisendes und als Betonfertigteil ausgebildetes Betonleitwandelement (3), wobei das Abweiseprofil ein New Jersey Profil oder ein Step Profil ist, wobei das Bewehrungselement (1) Längsbewehrungsstäbe (4) und quer zu den Längsbewehrungsstäben (4) verlaufende und mit den Längsbewehrungsstäben (4) verschweißte Bügel (5) aufweist, dass das Bewehrungselement (1) zumindest einen ersten Bereich (6) aufweist, dass der erste Bereich (6) im Wesentlichen geformt ist wie das Abweiseprofil des herzustellenden Betonleitwandelements (3), **dadurch gekennzeichnet, dass** die Längsbewehrungsstäbe (4) und die Bügel (5) ein zweidimensionales, gekrümmtes Gitter aufbauen, und dass das Bewehrungselement (1) zum einfachen Stapeln und dadurch platzsparenden Transport flach und im Wesentlichen wie eine gekrümmte Fläche geformt ist.

2. Bewehrungselement (1) nach Anspruch 1, **dadurch gekennzeichnet, dass** ein Abstand der Bügel (5) zueinander variabel ist, und insbesondere in einem Bereich der Enden der Längsbewehrungsstäbe (4) kleiner ist als in einem Mittelbereich der Längsbewehrungsstäbe (4).

3. Bewehrungselement (1) nach Anspruch 1 oder 2, **dadurch gekennzeichnet, dass** ein Abstand der Längsbewehrungsstäbe (4) zueinander variabel ist, und insbesondere in Randbereichen des Abweiseprofils kleiner ist als in einem Mittelbereich des Abweiseprofils.

4. Bewehrungselement (1) nach einem der Ansprüche 1 bis 3, **dadurch gekennzeichnet, dass** ein Abstand der Längsbewehrungsstäbe (4) zueinander in einem Bereich der Enden der Bügel (5) kleiner ist als in einem Mittelbereich der Bügel (5).

5. Bewehrungselement (1) nach einem der Ansprüche 1 bis 4, **dadurch gekennzeichnet, dass** die Längsbewehrungsstäbe (4) einen anderen Durchmesser aufweisen als die Bügel (5).

6. Bewehrungselement (1) nach einem der Ansprüche 1 bis 5, **dadurch gekennzeichnet, dass** an dem ersten Bereich (6) ein zweiter Bereich (7) anschließt, dass der zweite Bereich (7) gegenüber dem ersten Bereich (6) abgewinkelt ist und vorgesehen ist, an einer Oberseite (8) des Betonleitwandelements (3) angeordnet zu sein.

7. Bewehrungselement (1) nach Anspruch 6, **dadurch gekennzeichnet, dass** das Bewehrungselement (1) lediglich den ersten Bereich (6) und den zweiten Bereich (7) aufweist.

8. Betonleitwandelement (3) für ein Fahrzeugrückhaltesystem, wobei das Betonleitwandelement (3) an wenigstens einer Längsseite (2) ein Abweiseprofil aufweist und als Betonfertigteil ausgebildet ist, wobei im Bereich der wenigstens einen Längsseite (2) ein Bewehrungselement (1) gemäß einem der Ansprüche 1 bis 7 oberflächennah angeordnet ist.

9. Betonleitwandelement (3) nach Anspruch 8, **dadurch gekennzeichnet, dass** das Betonleitwandelement (3) zwei ein Abweiseprofil aufweisende Längsseiten (2) aufweist, und dass bei beiden Längsseiten (2) jeweils ein Bewehrungselement (1) angeordnet ist.

10. Betonleitwandelement (3) nach Anspruch 8 oder 9, gekennzeichnet, dass sich die beiden Bewehrungselemente (1) im Bereich einer Oberseite (8) des Betonleitwandelements (3) zumindest aneinander grenzen, insbesondere überlappen.

11. Verfahren zur Herstellung eines, an wenigstens einer Längsseite (2) ein Abweiseprofil aufweisendes und als Betonfertigteil ausgebildetes Betonleitwandelements (3), wobei das Abweiseprofil ein New Jersey Profil oder ein Step Profil ist, wobei Längsbewehrungsstäbe (4) und quer zu den Längsbewehrungsstäben (4) verlaufende Bügel (5) zusammen zu einem Bewehrungselement (1) verbunden werden, wobei das Bewehrungselement (1) zumindest einen ersten Bereich (6) aufweist, wobei der erste Bereich (6) im Wesentlichen geformt ist wie das Abweiseprofil des herzustellenden Betonleitwandelements (3), wobei durch die Längsbewehrungsstäbe (4) und die Bügel (5) ein zweidimensionales, gekrümmtes Gitter aufgebaut wird, wobei das Bewehrungselement (1) zum einfachen Stapeln und dadurch platzsparenden Transport flach und im Wesentlichen wie eine gekrümmte Fläche geformt wird, wobei wenigstens eines der Bewehrungselemente (1) derart in eine Gussform eingebracht wird, dass das wenigstens eine Bewehrungselement (1) bei dem fertigen Betonleitwandelement (3) im Bereich der wenigstens einen Längsseite (2) oberflächennah angeordnet ist, wobei die Gussform zum Ausbilden des Betonleitwandelements (3) mit Beton ausgegossen wird.

12. Verfahren nach Anspruch 11, **dadurch gekennzeichnet, dass** die Bewehrungselemente (1) maschinell hergestellt werden.

## Claims

1. Reinforcing element (1) for a concrete barrier-wall element (3), which concrete barrier-wall element has a repelling profile on at least one longitudinal side (2), wherein the repelling profile is a New Jersey profile or a step profile, wherein the reinforcing element (1) has longitudinal reinforcing bars (4) and has bows (5), which extend transversely to the longitudinal reinforcing bars (4) and are welded to the longitudinal reinforcing bars (4), that the reinforcing element (1) has at least a first region (6), that the first region (6) is substantially formed like the repelling profile of the concrete barrier-wall element (3) to be produced, **characterized in that** the longitudinal reinforcing bars (4) and the bows (5) make up a two-dimensional curved grid, and that the reinforcing element (1) in order to be stacked easily and thus transported in a space-saving manner is flat and formed substantially like a curved surface.

2. Reinforcing element (1) according to claim 1, **characterized in that** a distance between the bows (5) is variable with respect to one another, and in particular is smaller in a region of the ends of the longitudinal reinforcing bars (4) than in a central region of the longitudinal reinforcing bars (4).

3. Reinforcing element (1) according to claim 1 or 2, **characterized in that** a distance between the longitudinal reinforcing bars (4) is variable with respect to one another, and in particular is smaller in edge regions of the repelling profile than in a central region of the repelling profile.

4. Reinforcing element (1) according to one of claims 1 to 3, **characterized in that** a distance between the longitudinal reinforcing bars (4) is smaller with respect to one another in a region of the ends of the bows (5) than in a central region of the bows (5).

5. Reinforcing element (1) according to one of claims 1 to 4, **characterized in that** the longitudinal reinforcing bars (4) have a different diameter than the bows (5).

6. Reinforcing element (1) according to one of claims 1 to 5, **characterized in that** a second region (7) adjoins the first region (6), that the second region (7) is angled relative to the first region (6) and is provided to be arranged on an upper side (8) of the concrete barrier-wall element (3).

7. Reinforcing element (1) according to claim 6, **characterized in that** the reinforcing element (1) has only the first region (6) and the second region (7).

8. Concrete barrier-wall element (3) for a vehicle retention system, which concrete barrier-wall element (3) has a repelling profile on at least one longitudinal side (2), wherein a reinforcing element (1) according to one of claims 1 to 7 is arranged close to the surface in the region of the at least one longitudinal side (2).

9. Concrete barrier-wall element (3) according to claim 8, **characterized in that** the concrete barrier-wall element (3) has two longitudinal sides (2) having a repelling profile, and that one reinforcing element (1) each is arranged on both longitudinal sides (2).

10. Concrete barrier-wall element (3) according to claim 8 or 9, **characterized in that** the two reinforcing elements (1) at least adjoin one another, in particular overlap in the region of an upper side (8) of the concrete barrier-wall element (3).

11. Method for producing a concrete barrier-wall element (3) having a repelling profile on at least one longitudinal side (2), wherein the repelling profile is a New Jersey profile or a step profile, wherein longitudinal reinforcing bars (4) and bows (5), which extend transversely to the longitudinal reinforcing bars (4), are connected together to form a reinforcing element (1), which reinforcing element (1) has at least one first region (6), wherein the first region (6) is substantially formed like the repelling profile of the concrete barrier-wall element (3) to be produced, wherein a two-dimensional curved grid is constructed by means of the longitudinal reinforcing bars (4) and the bows (5), wherein the reinforcing element (1) is formed substantially like a curved surface, wherein at least one of the reinforcing elements (1) is introduced into a casting mould in such a way that the at least one reinforcing element (1) is arranged close to the surface in the region of the at least one longitudinal side (2) in the finished concrete barrier-wall element (3), wherein the casting mould is cast with concrete to form the concrete barrier-wall element (3).

12. Method according to claim 11, **characterized in that** the reinforcing elements (1) are machine-made.

## Revendications

1. Elément de renforcement (1) pour un élément de paroi en béton (3), lequel élément de paroi en béton a un profil repoussant sur au moins un côté longitudinal (2), dans lequel le profil repoussant est un profil New Jersey ou un profil en escalier, dans lequel l'élément de renforcement (1) a des barres de renforcement longitudinales (4) et a des arcs (5), qui s'étendent transversalement aux barres de renforcement longitudinales (4) et sont soudés aux barres de renforcement longitudinales (4), que l'élément de renforcement (1) comporte au moins une première zone (6), que la première zone (6) est sensiblement formée comme le profil de répulsion de l'élément de barrière-mur en béton (3) à produire, **caractérisé en ce que** les barres de renforcement longitudinales (4) et les arcs (5) forment une grille courbe bidimensionnelle, et que l'élément de renforcement (1), afin d'être empilé facilement et donc transporté de manière peu encombrante, est plat et formé sensiblement comme une surface courbée.

2. Elément de renforcement (1) selon la revendication 1, **caractérisé en ce qu'**une distance entre les arcs (5) est variable l'une par rapport à l'autre, et en particulier est plus petite dans une région des extrémités des barres de renforcement longitudinales (4) que dans une région centrale des barres de renforcement longitudinales (4).

3. Elément de renforcement (1) selon la revendication 1 ou 2, **caractérisé en ce qu'**une distance entre les barres de renforcement longitudinales (4) est variable l'une par rapport à l'autre, et en particulier est plus petite dans les régions des bords du profil de repoussement que dans une région centrale du profil de repoussement.

4. Elément de renforcement (1) selon l'une des revendications 1 à 3, **caractérisé en ce qu'**une distance entre les barres de renforcement longitudinales (4) est plus petite l'une par rapport à l'autre dans une région des extrémités des arcs (5) que dans une région centrale des arcs (5).

5. Elément de renforcement (1) selon l'une des revendications 1 à 4, **caractérisé en ce que** les barres de renforcement longitudinales (4) ont un diamètre différent de celui des arcs (5).

6. Elément de renforcement (1) selon l'une des revendications 1 à 5, **caractérisé en ce qu'**une deuxième zone (7) jouxte la première zone (6), **en ce que** la deuxième zone (7) est inclinée par rapport à la première zone (6) et est prévue pour être disposée sur une face supérieure (8) de l'élément de mur-barrière en béton (3).

7. Elément de renforcement (1) selon la revendication 6, **caractérisé en ce que** l'élément de renforcement (1) a seulement la première région (6) et la deuxième région (7).

8. Elément de paroi en béton (3) pour un système de retenue de véhicule, lequel élément de paroi en béton (3) a un profil de répulsion sur au moins un côté longitudinal (2), dans lequel un élément de renforcement (1) selon l'une des revendications 1 à 7 est disposé près de la surface dans la zone d'au moins un côté longitudinal (2).

9. Elément de paroi en béton (3) selon la revendication 8, **caractérisé en ce que** l'élément de paroi en béton (3) a deux côtés longitudinaux (2) ayant un profil repoussant, et **en ce qu'**un élément de renforcement (1) est disposé sur les deux côtés longitudinaux (2).

10. Elément de paroi en béton (3) selon la revendication 8 ou 9, **caractérisé en ce que** les deux éléments de renforcement (1) sont au moins adjacents l'un à l'autre, en particulier se chevauchent dans la région d'un côté supérieur (8) de l'élément de paroi en béton (3).

11. Procédé de fabrication d'un élément de paroi en béton (3) présentant un profil repoussant sur au moins un côté longitudinal (2), dans lequel le profil repoussant est un profil New Jersey ou un profil en escalier, dans lequel des barres d'armature longitudinales (4) et des arcs (5), qui s'étendent transversalement aux barres d'armature longitudinales (4), sont reliés entre eux pour former une armature de renforcement, sont reliés ensemble pour former un élément de renforcement (1), lequel élément de renforcement (1) a au moins une première région (6), dans laquelle la première région (6) est substantiellement formée comme le profil repoussant de l'élément de barrière-mur en béton (3) à produire, dans lequel une grille courbe bidimensionnelle est construite au moyen des barres de renforcement longitudinales (4) et des arcs (5), dans lequel l'élément de renforcement (1) est formé essentiellement comme une surface courbe, dans lequel au moins un des éléments de renforcement (1) est introduit dans un moule de coulée de telle sorte que le au moins un élément de renforcement (1) est disposé près de la surface dans la région d'au moins un côté longitudinal (2) dans l'élément de mur de barrière en béton fini (3), dans lequel le moule de coulée est coulé avec du béton pour former l'élément de mur de barrière en béton (3).

12. Procédé selon la revendication 11, **caractérisé en ce que** les éléments de renforcement (1) sont fabriqués à la machine.
